# EUROPEAN PATENT APPLICATION

(11) **EP 1 933 555 A1**
(43) Date of publication of application: **18.06.2008**
(21) Application number: 07111296.5
(22) Date of filing: 28.06.2007
(51) Int. Cl.: H04N 5/64, A47B 81/06

(54) **Waterproof structure of TV**

(30) Priority: 04.12.2006 KR 20060121396
(71) Applicant: KTV Global Corporation, Dalseo-gu Daegu (KR)
(72) Inventor: Seo, Sang, Yeonsu-gu, Incheon (KR); Seo, Byung Hee, Cheonan-si, Chungcheongnam-do (KR); Kwon, O Chull, Gwanak-gu,Seoul (KR); Cho, Chang Min, Chilgok-gun, Gyeongsangbuk-do (KR)
(74) Representative: Cooper, Simon Mark

(57) **Abstract**

The present invention relates to a waterproof structure of a television. According to an embodiment of the invention, a waterproof structure of a television includes: a back cover that is closely adhered to a first waterproof packing; a front bezel that is coupled to the back cover; and a transparent front panel that is provided in the front bezel and is closely adhered to a second waterproof packing. In the waterproof structure, the front bezel includes: a first boss that is connected to the back cover by a first screw; a rib that supports the first waterproof packing closely adhered to the back cover by the first screw; a second boss that is connected to the front panel by a second screw; and a groove in which the second waterproof packing that is closely adhered to the front panel by the second screw is provided. The waterproof structure according to the embodiment of the invention makes it possible to achieve a reduction in manufacturing costs, an improvement in productivity, and mass production, and to achieve a perfect waterproof performance. As a result, it is possible to improve the durability of a television.

## Description

### Technical Field

The present invention relates to a waterproof structure, and more particularly to a waterproof structure of a TV that has a perfect waterproof performance and can be manufactured in large quantities.

### Background Art

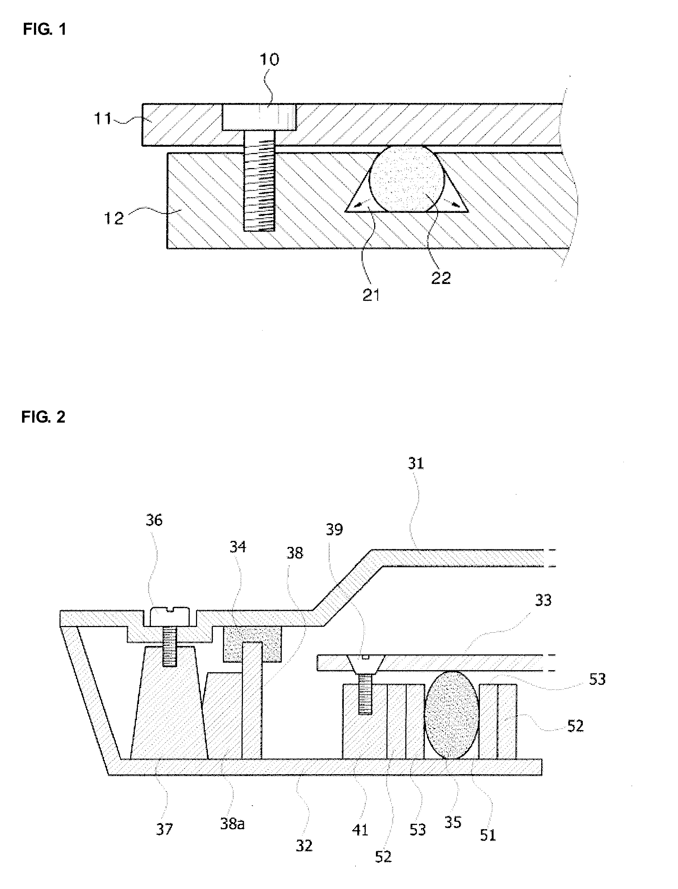

A waterproof structure of a TV according to the related art includes a front panel 11 formed of polycarbonate and a rear cover 12 formed of aluminum(See FIG.1), as disclosed in "Waterproof Device of TV (Korean Utility Model Registration No. 20-0411046)". That is, in the waterproof structure according to the related art, a male screw 10 is interlocked with a female screw formed in the rear cover 12 to couple the front panel 11 to the rear cover 12, so that a sealing member (O-ring) 22 inserted into a trapezoid-shaped sealing groove 21 formed in the rear cover 12 prevents the permeation of water.

In the waterproof structure according to the related art, the rear cover is formed by pouring fused aluminum into a mold and hardening the aluminum.

In order to perform molding, a mold is needed, and a finishing process, such as machining, needs to be performed, which results in an increase in manufacturing costs and a complicated manufacturing process. In addition, a sealing problem may arise due to defects occurring during molding, such as a blow hole and shrinkage cavity.

The manufacture of a mold for the rear cover having the above-mentioned problems can be applied to a process of manufacturing a small number of products, such as a process of manufacturing prototype products, but it is difficult for the manufacture of the mold to apply to a mass production process from the viewpoint of manufacturing costs and productivity.

Accordingly, the present invention has been contrived to solve the above-described drawbacks.

An object of the present invention is to provide a waterproof structure of a television that has a perfect waterproof performance and can be manufactured in large quantities, in which a back cover is formed of an aluminum plate from the viewpoint of manufacturing costs, a manufacturing process, and mass production, a waterproof structure including waterproof packings is formed on a front bezel that is formed of plastic, and the back cover and a front panel are coupled to the front bezel such that a predetermined pressure is applied to the waterproof packings.

### Disclosure of Invention

In order to accomplish the object of the present invention, according to a first aspect of the invention, there is provided a waterproof structure of a television. The waterproof structure includes: a back cover that is closely adhered to a first waterproof packing; a front bezel that is coupled to the back cover; and a transparent front panel that is provided in the front bezel and is closely adhered to a second waterproof packing. In the waterproof structure, the front bezel includes: a first boss that is connected to the back cover by a first screw; a rib that supports the first waterproof packing closely adhered to the back cover by the first screw; a second boss that is connected to the front panel by a second screw; and a groove in which the second waterproof packing that is closely adhered to the front panel by the second screw is provided.

According to a second aspect of the invention, there is provided a waterproof structure of a television. The waterproof structure includes: a back cover that is closely adhered to a first waterproof packing; a front bezel that is coupled to the back cover; and a transparent front panel that is provided in the front bezel and is closely adhered to a waterproof double-sided tape bonded to the front bezel. In the waterproof structure, the front bezel includes: a first boss that is connected to the back cover by a first screw; and a rib that supports the first waterproof packing closely adhered to the back cover by the first screw.

According to a third aspect of the invention, in the waterproof structure according to the first or second aspect, preferably, the back cover is formed of an aluminum plate by a drawing press, and the front bezel is formed of an ABS resin or a synthetic resin of ABS and polycarbonate by injection molding.

According to a fourth aspect of the invention, in the waterproof structure according to the first or second aspect, preferably, the first boss is arranged inwardly of the rib, and a waterproof O-ring is provided around the first screw tightened to the first boss.

According to a fifth aspect of the invention, in the waterproof structure according to the first aspect, preferably, the groove is composed of a pair of guide ribs arranged at a predetermined gap, and a plurality of protrusions are formed on inner surfaces of the guide ribs in zigzag to prevent the second waterproof packing from being taken out.

According to a sixth aspect of the invention, in the waterproof structure according to the first or second aspect, preferably, the first and second screws are formed of a stainless steel or plastic.

According to a seventh aspect of the invention, in the waterproof structure according to the first or second aspect, preferably, pressure applied to the first waterproof packing that is closely adhered to the back cover and pressure applied to the second waterproof packing (or the waterproof double-sided tape) that is closely adhered to the front panel are equal to or higher than 180 g/cm².

### Brief Description of Drawings

The above and other objects, features and advantages of the present invention will be more apparent from the following detailed description taken in conjunction with the accompanying drawings, in which:

FIG. 1 is a cross-sectional view of a waterproof structure according to the related art;

FIG. 2 is an enlarged side view illustrating a waterproof structure according to one embodiment of the invention;

FIG. 3 is an enlarged side view illustrating a waterproof structure according to another embodiment of the invention;

FIG. 4 is a partially enlarged perspective view of a front panel waterproof structure from the waterproof structures of the present invention;

FIG. 5 is a partially enlarged plan view illustrating a waterproof packing inserted into a groove shown in FIG. 4;

FIG. 6 is an enlarged side view illustrating a waterproof structure according to another embodiment of the present invention;

FIG. 7 is an enlarged side view illustrating a waterproof structure according to another embodiment of the present invention; and

FIGS. 8 and 9 are photographs showing waterproof experiments of a waterproof television according to the present invention.

### Best Mode for Carrying out the Invention

As shown in the drawings, a waterproof structure of a television according to an embodiment of the invention includes a back cover 31 that is closely adhered to a first waterproof packing 34, a front bezel 32 that is coupled to the back cover 31, and a transparent front panel 33 that is provided in the front bezel 32 and is closely adhered to a second waterproof packing 35.

In other words, the waterproof structure of a television according to the embodiment of the invention includes: an outer case of a TV composed of three components, that is, the back cover 31, the front bezel 32, and the transparent front panel 33; the first waterproof packing 34 that prevents permeation of water between the back cover 31 and the front bezel 32; and the second waterproof packing 35 that prevents permeation of water between the front bezel 32 and the front panel 33.

The transparent front panel 33 is provided in front of a flat display panel of a flat panel TV or a CRT of a TV and is formed of a transparent material, such as polycarbonate or acryl.

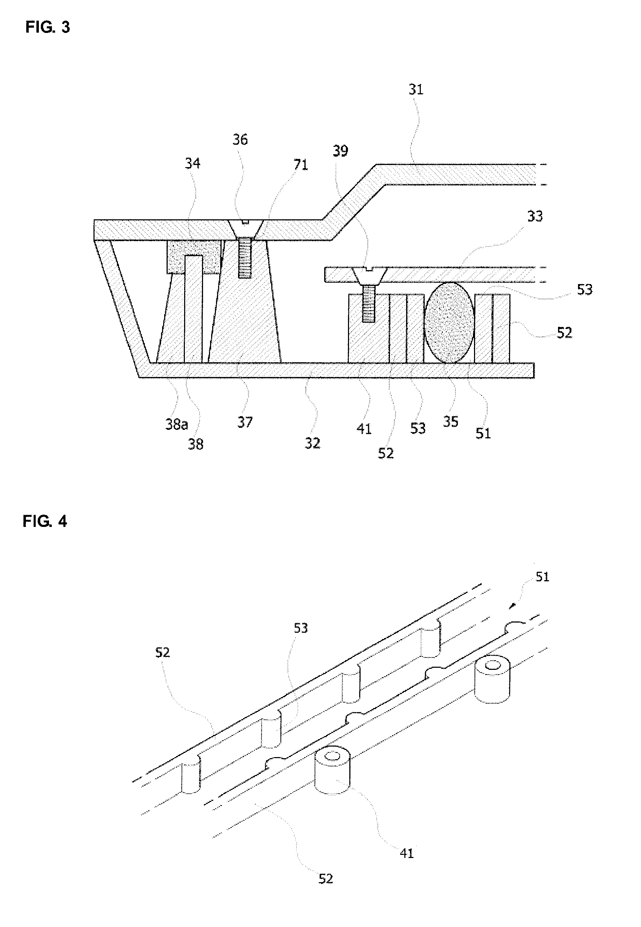

More specifically, as shown in FIGS. 2 and 3, in the waterproof structures according to these embodiments of the invention, the front bezel 32 includes: a first boss 37 that is connected to the back cover 31 by a first screw 36; a rib 38 that supports the first waterproof packing 34 closely adhered to the back cover 31 by the first screw 36; a second boss 41 that is connected to the front panel 33 by a second screw 39; and a groove 51 for the second waterproof packing 35 that is closely adhered to the front panel 33 by the second screw 39. Reference numeral 38a denotes a reinforcing member of the rib 38.

The first waterproof packing 34 has a U shape in sectional view, and the rib 38 is fitted into a concave portion of the U-shaped waterproof packing 34. The overall shape of the first waterproof packing 34 depends on the shape of the front bezel 32. That is, the first waterproof packing 34 may have a rectangular shape, a circular shape, a diamond shape, etc., in accordance with the shape of the front bezel 32. The second waterproof packing 35 has a thickness, so that it is tightly inserted into the groove 51 and is not to be taken out from the groove 51. As is the case with the first waterproof packing 34, the overall shape of the second waterproof packing 35 depends on the shape of the front panel 33. That is, the second waterproof packing 35 may have various shapes such as rectangle, circle or diamond, and the shape is not limited thereto.

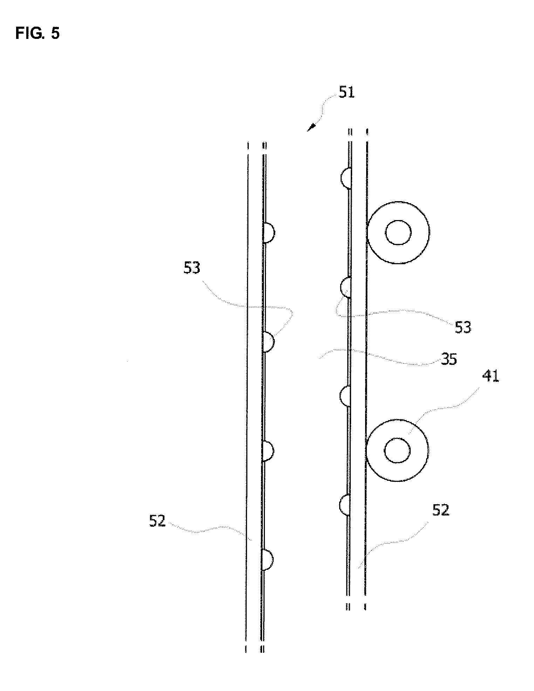

As shown in FIGS. 4 and 5, a pair of guide ribs 52 is provided at a predetermined gap in the groove 51, and protrusions 53 for preventing the second waterproof packing 35 from being taken out are formed on the inner surfaces of the guide ribs 52 in zigzag, as shown in a plan view of FIG. 5. When the second waterproof packing 35 is inserted into the groove 51, the second waterproof packing 35 is tightly caught among the protrusions 53 and is prevented from being easily taken out from the groove 51.

The groove 51 is formed by injection molding of the front bezel 32. During the injection molding process, uneven portions are likely to be formed on the inner surfaces of the guide ribs 52 to be brought into contact with the second waterproof packing 35 due to the shrinkage of the guide ribs 52, which may cause a poor waterproof performance by itself or cause the second waterproof packing 35 to be taken out, resulting in a poor waterproof performance.

Therefore, as described above, when the protrusions 53 are formed on the inner surfaces of the guide ribs 52, the shrinkage of the guide ribs is prevented and the second waterproof packing 35 is tightly inserted into the groove 51 so as not to be taken out from the groove 51, which makes it possible to obtain a desired waterproof performance.

Meanwhile, unlike the embodiment shown in FIG. 2, in the embodiment shown in FIG. 3, the first boss 37 is arranged inwardly of the rib 38. In this case, a waterproof O-ring 71 is provided around the first screw 36, in order to prevent permeation of water through a portion in which the back cover 31 is connected to the first boss 37 by the first screw 36. Contrary to the structure shown in FIG. 2, when the rib 38 fitted to the first waterproof packing 34 is provided outwardly of the first boss 37, as shown in FIG. 3, then a water-permeable space is minimally reduced, which makes it possible to prevent an adverse effect on electric parts of a TV.

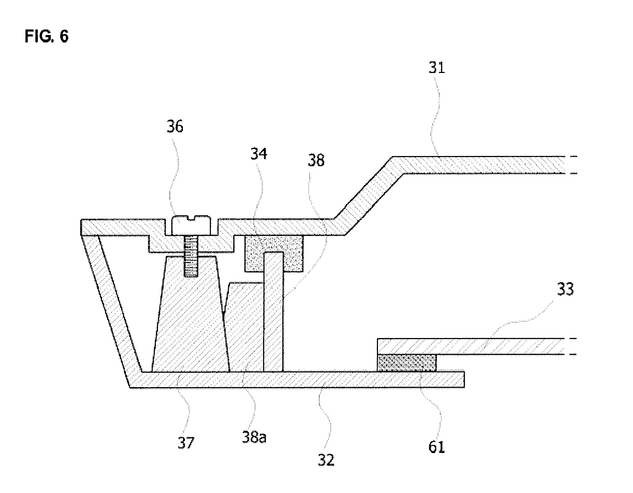

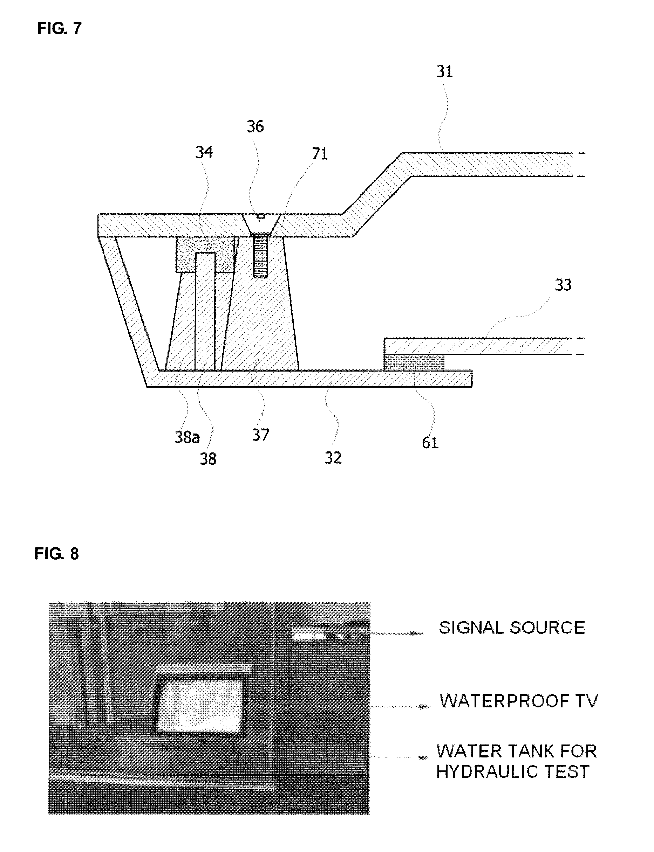

FIGS. 6 and 7 show waterproof structures for preventing permeation of water through a portion in which the front panel 33 is provided according to embodiments of the invention, respectively. In those embodiments, instead of the second boss 41 and the groove 51 used in embodiments of FIGS. 2 and 3, a waterproof double-sided tape 61 is used to connect the front panel 33 to the front bezel 32. When the waterproof double-sided tape 61 is used, it is easier to connect the front panel 33 to the front bezel 32, as compared to the embodiments of FIGS 2 and 3, and thus to rapidly perform a manufacturing process, which results in higher productivity.

Among the components of the waterproof structures according to the above-described embodiments of the invention, the back cover 31 is formed of an aluminum plate by a drawing press, and the front bezel 32 is formed of an ABS resin or a synthetic resin of ABS or polycarbonate by injection molding. Therefore, it is possible to manufacture the waterproof structure at lower costs and with higher productivity and to achieve mass production, as compared to the related art.

The first and second screws 36 and 39 are formed of plastic or a stainless steel, and are not rusted by water, which makes it possible to improve the outer appearance of a TV.

In the waterproof structure of a TV according to the above-described embodiments of the invention, the waterproofing of a first connection portion between the back cover 31 and the front bezel 32 by the first waterproof packing 34 and a second connection portion between the front bezel 32 and the front panel 33 by the second waterproof packing 35 is achieved as follows.

First, when the front panel 33 is connected to the second boss 41 of the front bezel 32 by the second screw 39, the front panel 33 presses the second waterproof packing 35 by the tightening force of the second screw 39 such that the second waterproof packing 35 completely closes up a gap of the second connection portion between the front panel 33 and the front bezel 32. In this way, front waterproofing is achieved.

Then, when the back cover 31 is connected to the first boss 37 of the front bezel 32 by the first screw 36, the back cover 31 presses the first waterproof packing 34 by the tightening force of the first screw 36 such that the first waterproof packing 34 completely closes up a gap of the first connection portion between the back cover 31 and the front bezel 32. In this way, rear waterproofing is achieved.

In this way, the front panel 33 and the back cover 31 are coupled to the front bezel 32 to achieve the front waterproofing and the rear waterproofing. Next, a description will be made of how much pressure is required on the first and second waterproof packings 34 and 35 in order to achieve the front and rear waterproofing when the back cover 31 and the front panel 33 press the first and second waterproof packings 34 and 35 respectively by the tightening force of the first and second screws 36 and 39.

In general, an international standard for waterproofing is an IP standard, but NEMA, KS, or JIS may be used a standard for waterproofing. In the above-described embodiments of the invention, the waterproofing test is configured according to the IP standard. The highest waterproof level from the IP standard is IP 68 that indicates submersion in water, which is adopted as a criterion of waterproof the invention is aimed at. The IP 68 standard means a waterproof structure that is waterproof in all directions and withstands water pressure at a depth of 1.8 m.

In general, atmospheric pressure is represented by 1 atm or 1 bar, or it may be represented by 1 kg/cm² in terms of MKS. To be exact, 1 atm is 1.033 kg/cm², and 1 bar is 1.02 kg/cm². However, 1 atm or 1 bar may safely be regarded as 1 kg/cm². Water pressure at a depth of 1.8 m is about 1.18 kg/cm² (water pressure increases at a rate of 1 atm per 10 m in depth).

Therefore, in order to achieve waterproofing at a depth of 1.8 m, pressure applied between the first waterproof packing 34 and the back cover 31 when the back cover 31 and the front bezel 32 are connected to each other by the first screw 36 and pressure applied between the second waterproof packing 35 and the front panel 33 when the front panel 33 and the front bezel 32 are connected to each other by the second screw 39 should be equal to or higher than 180 g/cm².

The front panel 33 is connected to the front bezel 32 by the second screw 39, and then the back cover 31 is connected to the front bezel 32 by the first screw 36. In this case, a pressure of about 1 kg/cm², which is the atmospheric pressure, exists inside the waterproof structure of the invention when the back cover 31 and the front bezel 32 are connected to each other.

Therefore, in the above-described embodiments of the invention, in order to achieve a waterproof structure, pressure applied to the first waterproof packing 34 by the back cover 31 and pressure applied to the second waterproof packing 35 by the front panel 33 need to be equal to or higher than about 180 kg/cm² or about 200 kg/cm² considering a safety margin, (1.18 kg/cm² - 1 kg/cm² = 180 g/cm²). That is, when the first and second waterproof packings 34 and 35 are pressed by the back cover 31 and the front panel 33 at a pressure of 200 g/cm² that is higher than 180 g/cm², the minimum requirement, then sufficient waterproofing is achieved.

Since the pressures applied to the first and second waterproof packings 34 and 35 are set on the basis of the worst condition of submersion, the embodiments of the invention can provide a perfect waterproof structure.

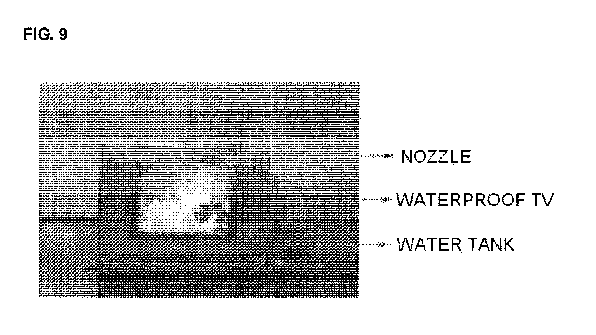

As can be seen on FIGS. 8 and 9 illustrating experiments made under the conditions that a TV having the waterproof structure is submerged in water, the waterproof structure according to the embodiments of the invention is perfect.

The waterproof structure of a TV according to the embodiments of the invention can be applied to both a flat panel television and a CRT television, but the invention is not limited thereto.

When the front panel 33 and the front bezel 32 are bonded to each other by the waterproof double-sided tape 61 as in the embodiments shown in FIGS. 6 and 7, the experiments shown in FIGS. 8 and 9 proved again that the waterproof structure withstands water pressure at a depth of 1.8 m, that is, 180 g/cm².

### Industrial Application

Televisions having the waterproof structure according to the embodiments of the invention can be installed in damp or humid places, such as public baths and bathrooms of houses or hotels. In addition, even when the televisions are submerged in water due to floods, there is no fear that the televisions will be broken down.

The waterproof structure according to the embodiments of the invention makes it possible to achieve a reduction in manufacturing costs, an improvement in productivity, and mass production, and to achieve a perfect waterproof performance. As a result, it is possible to improve the durability of televisions.

## Claims

1. A waterproof structure of a television, comprising:
a back cover closely adhered to a first waterproof packing;
a front bezel coupled to the back cover; and
a transparent front panel that is provided in the front bezel and is closely adhered to a second waterproof packing,
wherein the front bezel includes:
a first boss connected to the back cover by a first screw;
a rib supporting the first waterproof packing closely adhered to the back cover by the first screw;
a second boss connected to the front panel by a second screw; and
a groove in which the second waterproof packing that is closely adhered to the front panel by the second screw is provided.

2. A waterproof structure of a television, comprising:
a back cover closely adhered to a first waterproof packing;
a front bezel coupled to the back cover; and
a transparent front panel provided in the front bezel and is closely adhered to a waterproof double-sided tape bonded to the front bezel,
wherein the front bezel includes:
a first boss connected to the back cover by a first screw; and
a rib supporting the first waterproof packing closely adhered to the back cover by the first screw.

3. The waterproof structure of a television as claimed in claim 1 or 2,
wherein the back cover is formed of an aluminum plate by a drawing press, and the front bezel is formed of an ABS resin or a synthetic resin of ABS and polycarbonate by injection molding.

4. The waterproof structure of a television as claimed in claim 1 or 2,
wherein the first boss is arranged inwardly of the rib, and
a waterproof O-ring is provided around the first screw tightened to the first boss.

5. The waterproof structure of a television as claimed in claim 1,
wherein the groove is composed of a pair of guide ribs arranged at a predetermined gap, and
a plurality of protrusions are formed on inner surfaces of the guide ribs in zigzag to prevent the second waterproof packing from being taken out from the groove.

6. The waterproof structure of a television as claimed in claim 1 or 2,
wherein the screws are formed of a stainless steel or plastic.

7. The waterproof structure of a television as claimed in claim 1,
wherein pressure applied to the first waterproof packing which is closely adhered to the back cover and pressure applied to the second waterproof packing that is closely adhered to the front panel are equal to or higher than 180 g/cm².

8. The waterproof structure of a television as claimed in claim 2,
wherein pressure applied to the first waterproof packing which is closely adhered to the back cover and pressure applied to the waterproof double-sided tape that is closely adhered to the front panel are equal to or higher than 180 g/cm².
